# EUROPÄISCHE PATENTSCHRIFT

(11) **EP 4 299 166 B1**
(45) Veröffentlichungstag und Bekanntmachung des Hinweises auf die Patenterteilung: **22.10.2025**
(21) Anmeldenummer: 23172826.2
(22) Anmeldetag: 11.05.2023
(51) Int. Cl.: B01D 67/00, B01D 69/02, B01D 69/06, B01D 69/08, B01D 71/68

(54) **VERFAHREN ZUR HERSTELLUNG UND MODIFIZIERUNG VON POLYMER-FILTERMATERIALIEN**
PROCESS FOR THE PREPARATION AND MODIFICATION OF POLYMER FILTER MATERIALS
PROCEDE DE FABRICATION ET DE MODIFICATION DE MATERIAUX FILTRANTS POLYMERES

(30) Priorität: 01.07.2022 DE 102022116515
(43) Veröffentlichungstag der Anmeldung: 03.01.2024
(73) Patentinhaber: Leibniz-Institut für Oberflächenmodifizierung e.V., 04318 Leipzig (DE)
(72) Erfinder: Breite, Dr. Daniel, 04315 Leipzig (DE); Schulze, Dr. Agnes, 04463 Großpösna (DE); Leopold, Konrad, 04317 Leipzig (DE)
(74) Vertreter: Gulde & Partner

(56) Entgegenhaltungen:
- WO-A1-97/10048
- DE-A1- 102009 036 947

## Beschreibung

Die Erfindung betrifft ein Verfahren zur Herstellung und Veredelung von Polymer- Filtermaterialien, insbesondere flache Filtermembranen oder Hohlfasermembranen, jeweils aus Polymer.

Pulido et al (2019, Recycled Poly(ethylene terephthalate) for High Temperature Solvent Resistance Membranes ACS Appl. Polym. Mater. 2019, 1, 2379-2387) beschreiben die Herstellung von Membranen aus recyceltem PET über die NIPS-Methode (Phasenseparation, induziert durch ein Nichtlösungsmittel). Zum Auflösen der PET-Flaschen wurde Trifluoressigsäure und Dichlormethan genutzt. Ausgefällt wurde in Ethanol. Als porenbildendes Additiv für den Prozess der Ausfällung des Polymers wurde PEG (Polyethylenglykol) zugegeben. Die erreichte Performance der hergestellten Membranen ist ungenügend.

US 2021 / 0 178 333 A1 beschreibt Membranen für die Kultivierung adhärenter Zellen, wobei die Membranen zur Adhäsion und Proliferation der adhärenten Zellen mit Elektronenstrahlung spezieller Dosis in Anwesenheit von Sauerstoff bestrahlt werden.

In EP 3 939 694 A1 wird eine PET-Membran durch Fällung einer PET-Lösung, bspw. im Lösungsmittel NMP, in einem Nichtlösemittel ausgefällt. Das Nichtlösemittel ist bspw. Wasser oder eine Wasser-Alkohol-Mischung. Dabei wird ein Substrat mit der heißen PET-haltigen Lösung beschichtet und dieses zur Fällung einer PET-Membran in ein Nichtlösemittel gebracht. Auch hier werden (für die Ausfällung) der PET-Lösung Additive zugesetzt, wie bspw. PEG oder PVP.

Generell ist beim Fällen durch Tauchen der Austauschprozess zwischen beispielsweise Wasser und dem organischen Lösungsmittel langsam.

DE 10 2009 036 947 A1 beschreibt die Modifizierung fertig polymerisierter Membranen, wie Polyethersulfon- oder Polysulfon- oder Polyacrylnitril-Membranen mit einer wässrigen niedermolekularen Verbindung und ionisierender Strahlung. Beschrieben werden bspw. Benzoesäure, Malonsäure, Phenylphosphonsäure, Taurin, Toluolsulfonsäure, Glycerin, Ethylamin, Triethylamin, Methylmalonsäure, Naphthalindisulfonsäure, Phosphorylcholin, Diethylphosphoramidat, Glutamin, Glucose, Phosphonopropionsäure oder Mischungen daraus.

Vergleichbares offenbart WO 2009 / 086 347 A1, wobei eine fertige Membran mit dem Elektronenstrahl behandelt wird. Durch den Elektronenstrahl wird die Membran mit einer sogenannten "graftable species", wie bspw. ein Polyalkylene-glycol-di(meth)acrylat funktionalisiert.

Ähnliches behandelt WO 2011 / 139 656 A1, wobei eine mikroporöse Halokarbon-Polymermembran mittels Elektronenstrahl modifiziert wird. Als Additive werden u.a. beschrieben KOH, NaOH, Na-vinylsulfonat, Natriumsulfit, Natriumsulfat und Tenside.

WO 2021 / 101 987 A1 offenbart eine permanent-hydrophile Filtermembran, welche ein Polymermatrixmaterial umfasst und ein quervernetztes Polyoxazolin-Additiv enthält, welches in die Matrix gemischt wurde und mittels Elektronenstrahlung quervernetzt wurde.

Alternativ können, wie in EP 0 216 622 A2 beschrieben, Membranen auch direkt mittels UV- oder Elektronenstrahlung polymerisiert werden, anstatt sie bereits als fertiges Polymer aufzulösen und "in Membranform" zu fällen.

In WO 2006 / 135 966 A1 wird eine poröse, hydrophobe Membran (durch Vernetzung) hergestellt aus einer Polymermischung, die eine hydrophobe, nicht-vernetzbare Komponente und eine vernetzbare Komponente, wie bspw. PVP, enthält. Es wird somit ein Polymer mittels Vernetzung hergestellt. Für die Vernetzung sind chemische, thermische oder Strahlungsbedingungen genannt. Auch bei der Bestrahlung geht es um die Vernetzung zu einer Membran. Als Vernetzungsinitiatoren sind anorganische und organische Säuren oder Alkohole genannt. Die o.a. nicht-vernetzende Komponente kann anschließend ausgewaschen werden. Sie wird nicht kovalent an die Membran gebunden.

WO 97/10048 A1 offenbart die Herstellung eines Polymer-Filtermaterials aus einer Polymerlösung, welche neben dem in einem Lösungsmittel (Dimethylacetamid) gelösten Polymer (Polyethersulfon) ein Modifizierungsreagenz (Propionsäure) enthält. Hierbei wird besagte Polymerlösung in einem Fällbad koaguliert und nach dem Trocknen einer Elektronenstrahlbehandlung unterzogen.

Der Erfindung liegt nun die Aufgabe zugrunde, ein Verfahren bereitzustellen, mit dem (mit Modifizierungsreagenzien veredelte) Polymer-Filtermaterialien platzsparend und kostengünstig hergestellt werden können. Auf große Badvolumina soll, wo es möglich ist, verzichtet werden. Die Permeabilität soll mindestens vergleichbar wie in bekannten Polymer-Filtermaterialien sein. Die Lebensdauer sollte möglichst hoch sein, so dass sich Wartungs- und Reinigungsintervalle der Anlage reduzieren lassen. Auch das bekannte Fouling sollte reduziert werden können.

Gegenstand der Erfindung ist ein Verfahren zur Herstellung und Veredelung von Polymer-Filtermaterialien nach Anspruch 1 und mit den Schritten:
a) Fällung eines feuchten Polymer-Filtermaterials aus einer Polymerlösung, enthaltend das gelöste Polymer und ein Modifizierungsreagenz, in einem Fällungsbad, wobei das Modifizierungsreagenz in der Polymerlösung eine Konzentration von 0,05 - 1,1 Gew-% hat und auf eine Trocknung des erhaltenen feuchten Polymer-Filtermaterials verzichtet wird, und
b) Elektronenstrahl-Veredelung des noch feuchten Polymer-Filtermaterials aus Schritt a), so dass das Modifizierungsreagenz fixiert wird, wobei die Zeit ab Beginn der Fällung in dem Fällungsbad (2) in Schritt a) bis zum Beginn der Elektronenstrahl-Veredelung in Schritt b) bei max. 2 Minuten liegt.

Ein bereits fertig polymerisiertes Polymer wird somit durch Auflösen und Fällen in eine Form gebracht, die die Nutzung als Filtermaterial erlaubt. Dabei ist das Modifizierungsreagenz, welches durch Elektronenstrahlbehandlung am Polymer-Filtermaterial mittels kovalenter Bindungen fixiert wird und dieses dadurch veredelt, bereits in der zu fällenden Polymerlösung enthalten und haftet bei der Fällung in Schritt a) an der Außenfläche und in den Poren und auch zwischen den festen Polymerdomainen des feuchten Polymer-Filtermaterials an.

### Zu Schritt a):

Die Fällung in Schritt a) kann beispielsweise über Phaseninversion stattfinden. Jedenfalls enthält das Fällungsbad sinnvollerweise in großen Mengen ein (für das jeweils zu fällende Polymer) Nichtlösemittel, damit das Polymer überhaupt ausfällt. In der zu fällenden Polymerlösung ist neben dem gelösten Polymer bereits das Modifizierungsreagenz enthalten, welches der Elektronenstrahl-Veredelung in Schritt b) dient und dort am Filtermaterial fixiert (d.h. kovalent angebunden) wird. Es können auch mehrere Modifizierungsreagenzien als Mischung angewendet werden.

### Zu Schritt b):

Der Begriff "Elektronenstrahl-Veredelung" beschreibt jegliche Behandlung mit ionisierender Strahlung, wobei die Veredelung darin besteht, dass das Modifizierungsreagenz oder die Modifizierungsreagenzien an dem Polymer-Filtermaterial fixiert werden (mittels kovalenter Bindungen) und so die Eigenschaften des Polymer-Filtermaterials verbessert werden können.

Die Veredelung "des noch feuchten" Polymer-Filtermaterials bedeutet, dass aktiv auf eine Trocknung verzichtet wird, denn danach müsste das Polymer erst wieder aufwändig mit Modifizierungsreagenz getränkt werden. Es ist möglich, dass sonst solche Wechsel in den Lösungs-/Nichtlösungsstadien einer Polymermembran der Grund für eine verringerte Stabilität sein könnten. Denn schließlich ist das Verhalten der feuchten Polymerketten an der Oberfläche (nach einer Ausfällung) beeinflusst, wenn diese getrocknet werden - die Ketten agglomerieren und verlieren vorerst ihre Flexibilität, welche sie nicht in gleicher Weise wiedererlangen - die Fixierung von Modifizierungsreagenzien wird dann eine andere sein - die Eigenschaften der Membran ebenfalls.

Die Kombination mit einer Modifizierung mit den Modifizierungsreagenzien, und zwar im noch feuchten Zustand, führt erfindungsgemäß zu den in den folgenden Absätzen aufgeführten Vorteilen.

Wichtig ist bei der Erfindung die zeitliche und räumliche Nähe beider Schritte a) und b), da nur so sichergestellt werden kann, dass das zugesetzte Modifizierungsreagenz noch nicht vollständig durch das Fällungsbad ausgewaschen wurde und somit für die Veredelung in Schritt b) zur Verfügung steht.

Gegenstand der Erfindung ist auch die Verwendung von Einweg- bzw. Mehrweg-Polymerflaschen für das erfindungsgemäße Verfahren. Wie sich dem Fachmann erschließt, sind diese Flaschen sinnvollerweise zu zerkleinern und das Polymer in Lösung zu bringen, und das erfindungsgemäße Modifizierungsreagenz ist dieser Polymerlösung hinzuzufügen, so dass dann erfindungsgemäß mit Schritt a) gefällt werden kann.

Schließlich ist ebenfalls Gegenstand der Erfindung die Verwendung des erfindungsgemäßen Verfahrens zur Herstellung von Ultrafiltrationsmembranen.

Vorteil der Erfindung ist, dass das Modifizierungsreagenz homogener am und vor allem im Filtermaterial verteilt ist. Denn dadurch, dass das Modifizierungsreagenz bereits in der zu fällenden Polymerlösung enthalten ist, wird es beim Fällen nicht nur an der Oberfläche abgelagert, sondern befindet sich auch im Inneren zwischen festen Polymerdomainen und in Poren des Filtermaterials.

Mit der Erfindung ist es vorteilhaft möglich, das veredelte Polymer-Filtermaterial in einem einzigen Produktionsschritt bzw. in einem einzigen Anlagenteil durchzuführen.

Es ermöglicht den Rolle-zu-Rolle-Aufbau der Herstellungsanlage. Das heißt, durch die zeitliche und räumliche Nähe zwischen Polymerfällung (Schritt a) und Elektronenstrahlveredelung (Schritt b) ist es möglich, die Anlage zu verkleinern. Das bedeutet, die Herstellungsanlage ist einfach und die Herstellung zeitsparend möglich.

Es bedarf keines volumengroßen Imprägnierbades vor der Bestrahlung mehr. Denn im Stand der Technik ist das (an-)getrocknete Polymer vor einer Elektronenbestrahlung mit dem Modifizierungsreagenz zu benetzen. Die Erfindung dagegen, bei der das Modifizierungsreagenz direkt in der Lösung des zu fällenden Polymers (das ist die Polymerlösung) eingebracht wurde, erlaubt einen platzsparenderen Aufbau. Wegstrecke wird somit eingespart. Die Anlage ist kleiner.

Vorteilhaft erreicht man mit dem wesentlich verkürzten Verfahren dennoch vergleichbare Permeabilität der Polymer-Filtermaterialien. Wie erwähnt ist es nicht mehr nötig, die getrocknete Membran vor der Veredelung mittels Strahlung erst zeitaufwändig mit einer Lösung, die das Modifizierungsreagenz enthält, zu tränken. Auf Ethanol, welches oft für dieses Tränken verwendet wird, kann verzichtet werden, was vor allem bei großen Losgrößen von Vorteil ist. Das Verfahren ist somit einfacher und vor allem schneller durchzuführen. Die CO₂-Emmision wird damit ebenfalls reduziert, was wiederum eine Kostenersparnis mit sich bringt.

Es ist von Vorteil, dass das in Schritt a) gefällte Filtermaterial keine Zwischenschritte durchlaufen muss, sondern unmittelbar und noch feucht in Schritt b) veredelt werden kann, da an und im Filtermaterial bereits das Modifizierungsreagenz aus der Polymerlösung anhaftet.

Das erhaltene Produkt hat gegenüber konventionellen Membranen aus dem Stand der Technik eine doppelt so lange Lebensdauer, so dass sich Wartungs- und Reinigungsintervalle der Anlage reduzieren lassen. Das Fouling ist reduziert um 60-90%, die Permeabilität sogar erhöht um bis zu 90% und der Energieaufwand der Anlage reduziert um bis zu 50%.

In bevorzugter Ausgestaltung der Erfindung findet nach Schritt b) als abschließender Schritt nach der Elektronenstrahlveredelung ein Waschen und eine Trocknung statt.

In weiterer bevorzugter Ausgestaltung der Erfindung ist vorgesehen, dass die Modifizierungsreagenzien nicht polymerisierbare Porenbildner sind. "Nicht polymerisierbar" heißt hierbei, dass es nicht möglich ist, geordnet mehr als 10 Monomereinheiten zu verknüpfen (bevorzugt bereits 5). Davon abzugrenzen sind Vernetzungen, die bei extrem hohen Temperaturen bspw. >500°C bei der Carbonsierung unkontrolliert stattfinden - solche Verknüpfungen sollen nicht als Polymerisation gelten. Besonders bevorzugt haben die Modifizierungsreagenzien keine Vinylgruppe. Vorteil dieser Ausführungen ist, dass es lediglich zur Oberflächenmodifikation des Polymer-Filtermaterials kommt, nicht aber zu einer weiteren Verknüpfung freier Enden (im Sinne einer "Schlaufenbildung") an der Oberfläche. Das Filtermaterial, bspw. als Flachfiltermembran, hat damit homogen über die Oberfläche verteilt gleiche physikalische Eigenschaften.

In einer ganz besonders bevorzugten Ausführungsform handelt es sich bei dem Modifizierungsreagenz um eine Verbindung, die kein Polymer oder Oligomer, sondern ein Monomer mit mindestens 2 OH-Gruppen (wie Ethylenglykol), insbesondere auch mindestens 3 OH-Gruppen (wie Glycerin), ist. Vorteilhaft eignen sich solche Verbindungen besonders, um erfindungsgemäß bereits in der Polymerlösung eingesetzt zu werden, aber erst in einem späteren Elektronenstrahl-Veredelungsschritt fixiert zu werden.

In einer anderen bevorzugten Ausführungsform der Erfindung ist das Modifizierungsreagenz ausgewählt aus Glycerin, Benzoesäure, Malonsäure, Taurin, Toluolsulfonsäure, Ethylamin, Triethylamin, Phosphorylcholin, Glutamin, Glukose und Propionsäure. Vorteil dieser Ausführung ist, dass sich diese Modifizierungsreagenzien besonders eignen, um schon in der Polymerlösung in Schritt a) enthalten zu sein, ohne die Ausfällung in Schritt a) negativ zu beeinflussen.

In einer bevorzugten Ausführungsform handelt es sich in Schritt a) um eine Nassfällung oder eine Nichtlösungsmittel-induzierte-Phasenseparation (das ist die bekannte NIPS-Methode - non solvent induced phase separation).

In einer anderen bevorzugten Ausführung sind im Fällungsbad mindestens 50 Gew-% Wasser enthalten, besonders bevorzugt >90 Gew-%. Vorteil ist, dass Wasser für Polymer-Filtermaterialien in der Regel das geeignetste Fällungsmittel ist.

In einer weiteren bevorzugten Ausführungsform des erfindungsgemäßen Verfahrens ist das Lösungsmittel in der zu fällenden Polymerlösung ausgewählt aus n-Methylpyrolidon (NMP), Dimethylformamid (DMF), Dimethylacetamid (DMAc), Dimethylsulfoxid (DMSO) und Mischungen daraus. Vorteil ist, dass diese Lösungsmittel in der Regel geeignet sind, alle Polymere, die für Polymer-Filtermaterialien in Frage kommen, zu lösen - unabhängig von der genauen Struktur des Polymers.

In einer besonderen Variante, werden die beiden letztgenannten Ausführungsformen kombiniert. Vorteilhaft erlaubt diese Kombination der Lösungsmittel (in der Polymerlösung) mit dem Wasser (im Fällungsbad) eine effektive Fällung in Schritt a) und sorgt aber gleichzeitig dafür, dass das Modifizierungsreagenz aus der Polymerlösung bestmöglich auf das gefällte, feuchte Polymer-Filtermaterial übergeht. Denn dies soll in Schritt b) ja mittels Elektronenstrahl-Veredelung am Polymer-Filtermaterial fixiert werden.

In einer bevorzugten Ausgestaltung der Erfindung ist das gefällte und veredelte Polymer-Filtermaterial (erhalten mittels des erfindungsgemäßen Verfahrens) eine Flachfiltermembran oder eine Hohlfasermembran. Diese Formen haben sich als für die Filtration geeignet erwiesen.

In einer Ausführungsform der Erfindung ist das Polymer ausgewählt aus den halogenfreien Polymeren PES, PET, PE und PP. Sie eignen sich vorteilhaft besonders gut, um ein Modifizierungsreagenz (wie insbesondere das Glycerin) bei der Ausfällung einzuschließen bzw. anhaften zu lassen, ohne vollständig vom Fällungsbad abgespült zu werden, so dass vorteilhaft bei diesen Polymeren ausreichend Modifizierungsreagenz an der Oberfläche des noch feuchten Polymer-Filtermaterials haften bleibt, welches dann in Schritt b) fixiert werden kann. Das erhaltene Polymer-Filtermaterial weist somit bessere physikalische Eigenschaften auf. Ganz besonders bevorzugt ist demnach in dieser Ausführungsform das Modifizierungsreagenz Glycerin.

Besonders bevorzugt ist das Polymer Recycling-PET, Recycling-PE oder Recycling-PP. Vorteilhaft bietet das erfindungsgemäße Verfahren damit eine Möglichkeit zum Recycling von Ein- oder Mehrwegflaschen oder Einkaufstüten etc. zum Erhalt veredelter Polymer-Filtermaterialien - und zwar in einem kostengünstigen Verfahren (aufgrund der eingangs genannten Vorteile der Erfindung), was insbesondere bei Recyclingverfahren von Interesse ist. Darüber hinaus könnte, aufgrund der Platzersparnis, ein Anlagenmodul zur Durchführung des erfindungsgemäßen Verfahrens in Recyclinganlagen Platz finden.

In einer bevorzugten Ausführungsform der Erfindung ist das gefällte und veredelte Polymer-Filtermaterial eine Hohlfasermembran, und die Fällung im Innern der Hohlfasermembran in Schritt a) wird mit einer Kernlösung durchgeführt. Von außen findet die Fällung der Hohlfasermembran mittels des Fällungsbades statt. Die Zusammensetzung der Kernlösung ist demnach vergleichbar, wie die das Fällungsbades. Bevorzugt hat es die gleiche Zusammensetzung. Vorteilhaft lässt sich mit dieser Ausführungsform die Erfindung auch für Hohlfasermembranen verwirklichen. Ganz besonders von Vorteil ist aber eine Variante dieser Ausführung, bei der auch die Kernlösung das Modifizierungsreagenz enthält. Denn vorteilhaft haftet damit auch an der Innenseite der feuchten Hohlfasermembran das Modifizierungsreagenz.

Eine bevorzugte Ausführung der Erfindung weist einen, dem Schritt a) vorgelagerten Schritt der Formgebung des zu fällenden Polymer-Filtermaterials mittels einer Formgebungsvorrichtung auf. Besonders bevorzugt ist ihr ein Reservoir für die Polymerlösung vorgeschaltet. Vorteil ist, dass Polymerlösung aus dem Reservoir unmittelbar durch die Formgebungsvorrichtung in eine Form gebracht werden kann, die dem fertigen Polymer-Filtermaterial entspricht. Aber auch ohne Reservoir wird sinnvollerweise die Form des zu fällenden Polymers vor dem Fällen in Schritt a) festgelegt, bspw. mittels Streichen einer Fläche oder Drücken durch eine Düse.

Bei einer bevorzugten Ausgestaltung der o.a. Ausführung mit Formgebungsvorrichtung ist die Formgebungsvorrichtung eine Abwicklung für ein Trägervlies oder eine Hohlfaserspinndüse. Sinnvollerweise ist bei einer Abwicklung eines Trägervlies zur Formgebung die Polymerlösung auf diesem Trägervlies aufgebracht, bzw. das Trägervlies damit getränkt, so dass bei Fällung in Schritt a) ein flächiges Polymer ausfällt. Im Falle einer Spinndüse ergibt sich ersichtlicher Weise ein Polymerfaden als Polymer-Filtermaterial. Vorteil dieser Variante mit Trägervlies ist, dass die eingestellte Form des zu fällenden Polymers stabiler gehalten werden kann, bis das Polymer beim Fällen in Schritt a) in den festen Aggregatzustand wechselt und seine Form behält. Das Trägervlies unterstützt zusätzlich das Anhaften des Modifizierungsreagenz an dem noch feuchten Polymer-Filtermaterial, bevor es in Schritt b) elektronenstrahlveredelt wird.

In einer weiteren bevorzugten Ausführungsform der Erfindung enthält die Polymerlösung in Schritt a) 14 Gew-% PES und 65 Gew-% PEG (jeweils mit ±10 Gew-%, insbesondere ±5 Gew-%, sogar 3± Gew-%) sowie das Modifizierungsreagenz. Besonders bevorzugt ist das PEG PEG-400, welches eine Molmasse zwischen 380 g/mol und 420 g/mol aufweist. Besonders bevorzugt ist auch das Modifizierungsreagenz in der genannten bevorzugten Ausführungsform Glycerin. Vorteilhaft hat sich diese Kombination aus Mischpolymer-Filtermaterial aus (kovalent nicht miteinander verbundenem) PES und PEG mit dem Modifizierungsreagenz Glycerin als sehr geeignet erwiesen, um mittels des erfindungsgemäßen Verfahrens hergestellt zu werden, d.h. um das Modifizierungsreagenz bereits in der zu fällenden Polymerlösung bereitzustellen und auf eine Tränkung/Imprägnierung nach der Fällung verzichten zu können.

Zudem kann die Polymerlösung unvermeidbare Verbindungen in geringen Mengen enthalten. Dabei ist bevorzugt, dass der Anteil einer einzelnen unvermeidbaren Verbindung höchstens 5 Gew-% beträgt (insbesondere sogar max. 2 Gew-%) und die Summe aller enthaltenen unvermeidbaren Elemente höchstens 15 Gew-% beträgt (insbesondere sogar max. 6 Gew-%).

Bevorzugt ist in der Polymerlösung PES und PEG enthalten im Gewichts-Verhältnis 1:3 bis 1:6, besonders bevorzugt 1:4 - 1:5, insbesondere 1 : 4,6 (±0,4).

Das Modifizierungsreagenz hat in der Polymerlösung vor der Fällung in Schritt a) eine Konzentration von 0,05-1,1 Gew-%, besonders bevorzugt 0,1-1,0 Gew-%, insbesondere 0,8-1,0 Gew-%. Vorteilhaft gelingt damit eine effektive Veredelung in Schritt b), auch wenn das Modifizierungsreagenz erfindungsgemäß bereits in der Polymerlösung bereitgestellt wird. Denn eine zu geringe Konzentration kann dazu führen, dass bei der Elektronenstrahl-Veredelung in Schritt b) nicht mehr genug Modifizierungsreagenz anhaftet. Eine zu hohe Konzentration dagegen kann die Fällung des Polymers im Fällungsbad (Schritt a)) stören.

In einer ebenfalls bevorzugten Ausführungsform enthält auch das Fällungsbad aus Schritt a) das Modifizierungsreagenz. Vorteilhaft kann dabei die Konzentration des Modifizierungsreagenz in der Polymerlösung sehr gering gehalten werden. Dennoch wird durch das Modifizierungsreagenz in der Polymerlösung auch zwischen den gefällten Polymerketten (innerhalb des gefällten feuchten Polymer-Filtermaterials) Modifizierungsreagenz eingebracht, was die Veredelung in Schritt b) effektiviert. Das Modifizierungsreagenz ist sinnvollerweise das gleiche, wie das in der Polymerlösung.

Die Zeit ab Beginn der Fällung in dem Fällungsbad in Schritt a) bis zum Beginn der Elektronenstrahl-Veredelung in Schritt b) bei nur max. 2 Minuten, besonders bevorzugt max. 1 Minute.

"Beginn der Fällung" ist der Zeitpunkt des Einleitens der Polymerlösung in das Fällungsbad. Das heißt, es ist bei dieser Zeitangabe sowohl die Zeit des feuchten Polymer-Filtermaterials (aus Schritt a)) an der Luft umfasst, als auch die Zeit, die das gefällte Polymer-Filtermaterial vorher in Schritt a) in dem Fällungsbad verbringt. Vorteilhaft führen diese Zeiten dazu, dass die Fällung effektiv genug stattfinden kann, gleichzeitig das Modifizierungsreagenz aber nicht zu stark aus dem gefällten Polymer-Filtermaterial ausgewaschen wird und immer noch das Gesamtverfahren ökonomisch in kurzer Zeit im Rolle-zu-Rolle-Ansatz durchgeführt werden kann.

In einer bevorzugten Ausführungsform der Erfindung wird in Schritt b) das feuchte Polymer-Filtermaterial mit 1-10 m/min durch die Bestrahlungseinheit geführt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert.
Fig. 1 zeigt eine Ausführung zur Herstellung einer Flachfiltermembran. Sie wird in Ausführungsbeispiel 1 erläutert.
Fig. 2 zeigt eine Ausführung betreffend eine Hohlfasermembran, welche in Ausführungsbeispiel 3 erläutert wird.
Fig. 3 zeigt eine grafische Gegenüberstellung von Vergleichsbeispielen aus Vergleichsbeispiel 2 mit erfindungsgemäßen Experimenten aus Ausführungsbeispiel 1.

### Ausführungsbeispiele

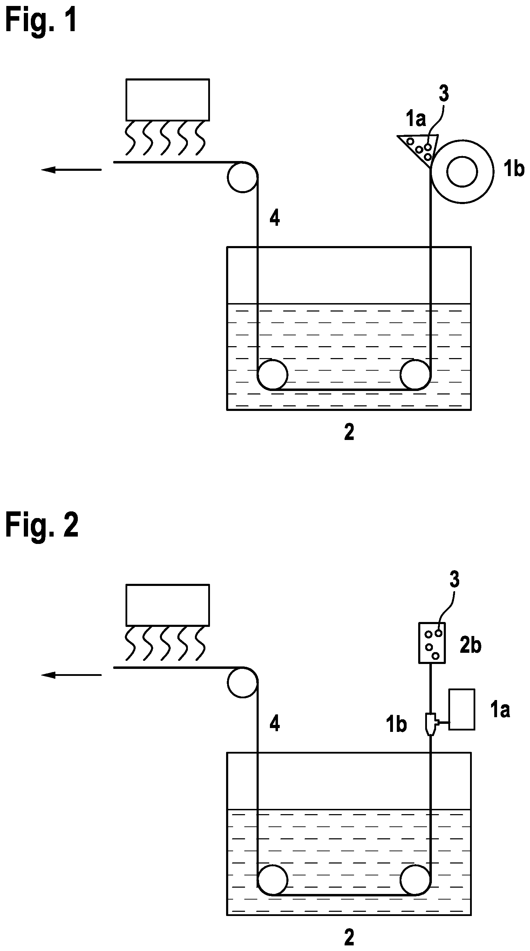

Ausführungsbeispiel 1: (Modifizierungsreagenz Glycerin in Polymerlösung, Flachfiltermembran) Das konkrete Ausführungsbeispiel 1 ist in Fig. 1 gezeigt.

Hierbei wird eine Flachfiltermembran hergestellt. Als Formgebungsvorrichtung 1b wurde eine Abwicklung für ein Trägervlies verwendet.

Zur Umsetzung einer in-situ Elektronenstrahl-Modifizierung von Polymermembranen muss der Modifizierungsschritt direkt mit der Membranherstellung gekoppelt werden. Die Membranherstellung basiert auf dem etablierten Verfahren der Nassfällung bzw. Nicht-Lösungsmittel-indizierten Phasenseparation (eng. non-solvent induced phase separation). Dabei wird zunächst eine Lösung des Membranpolymers in einem organischen Lösungsmittel, welches selbst mit Wasser mischbar ist (hier: N-Methylpyrrolidon (NMP), alternativ: Dimethylformamid (DMF), Dimethylacetamid (DMAc), Dimethylsulfoxid (DMSO)), hergestellt. Das Modifizierungsreagenz Glycerin wird zugegeben.

Anschließend erfolgt die Verarbeitung der Polymerlösung 1 durch die Erzeugung definierter Polymerfilme (hier: auf Trägervlies) für die Herstellung von Flachfiltermembranen. Durch den Kontakt mit einem Nicht-Lösungsmittel (in Bezug auf das Polymer, bspw. Wasser, verschiedene Alkohole, etc.) im Fällbad kommt es zur Fällung des Polymers in Form poröser Polymernetzwerke, welche als Membran fungieren können. Das Lösungsmittel und andere Additive (bspw. kurzkettige hydrophile Polymere zur Porenbildung), welche in der Polymerlösung vorhanden sind werden dabei während der Fällung, durch anschließende Waschschritte oder zum Teil erst im späteren Einsatz (betrifft vor allem Porenbildner in Form von Polymeren, nicht das Lösungsmittel) ausgewaschen.

Durch eine gezielte Zugabe von Modifizierungsreagenzien 3 zur Polymerlösung 1 werden diese Reagenzien somit auch (lokal begrenzt) in bzw. nahe der Membran für eine Immobilisierung mittels Elektronenstrahl bereitgestellt, ohne die Notwendigkeit eines zusätzlichen Imprägnierschritts. Da während der Fällung der Polymermembran zudem ein Wasser-mischbares Lösungsmittel anwesend ist, entfallen ebenfalls die zuvor beschriebenen Benetzungsprobleme.

Von großer Wichtigkeit ist hierbei die zeitliche und räumliche Nähe beider Teilprozesse in einem Verfahrensschritt, da nur so sichergestellt werden kann, dass das zugesetzte Modifizierungsreagenz noch nicht ausgewaschen wurde und für die Modifizierung zur Verfügung steht.

Die Basismembran wurde gefällt aus einer Polymerlösung aus 14 Gew-% PES, 65 Gew-% PEG-400 und 21 Gew-% NMP als Lösungsmittel in der Polymerlösung.

**Tabelle 1 zeigt weitere Parameter:**

| Membran | Konzentration des Modifizierungsreagenz in der auszufällenden Polymerlösung | Dosis bei Elektronenstrahlveredelung (Punktlast) |
|---|---|---|
| PES-01-i | 0,1 Gew-% | 150 kGy |
| PES-02-i | 0,1 Gew-% | 200 kGy |
| PES-03-i | 1 Gew-% | 150 kGy |
| PES-04-i | 1 Gew-% | 200 kGy |

Das Modifizierungsreagenz ist Glycerin und befindet sich in der Polymerlösung.

Die Bestrahlung erfolgte für 5 min.

Das noch feuchte Polymer-Filtermaterial wurde mit 1-10 m/min durch die Bestrahlung geführt. Zwischen Ausfällung und Veredelung mittels Bestrahlung lagen nur max. 2 Minuten, bevorzugt max. 1 Minute.

### Vergleichsbeispiel 2:

In diesem Vergleichsbeispiel befindet sich das Modifizierungsreagenz in einem separaten Imprägnierbad bei 30 min Einwirkzeit. Das heißt, die Filtermembran wurde zuerst gefällt, getrocknet und erst anschließend mit dem Modifizierungsreagenz imprägniert.

Auch hier wurde die Basismembran gefällt aus einer Polymerlösung aus 14 Gew-% PES, 65 Gew-% PEG-400 und 21 Gew-% NMP als Lösungsmittel in der Polymerlösung. Die Polymerlösung enthielt kein Modifizierungsreagenz.

**Tabelle 2 zeigt weitere Parameter von Vergleichsversuchen:**

| Membran | Konzentration des Modifizierungsreagenz in einem separaten Imprägnierbad | Dosis bei Elektronenstrahlveredelung nach der Imprägnierung |
|---|---|---|
| PES-01-k | 0,1 Gew-% | 150 kGy |
| PES-02-k | 0,1 Gew-% | 200 kGy |
| PES-03-k | 1 Gew-% | 150 kGy |
| PES-04-k | 1 Gew-% | 200 kGy |

Vergleich der Ergebnisse aus Ausführungsbeispiel 1 mit Vergleichsversuchen aus Vergleichsbeispiel 2:

**Tabelle 3 zeigt eine Gegenüberstellung**

| Membran | Wasserkontaktwinkel [°] | | Wasserpermeation [L h⁻¹ m⁻² bar⁻¹] | |
|---|---|---|---|---|
| | Vergleichsbsp. k | Ausführungsbsp. i | Vergleichsbsp. k | Ausführungsbsp. i |
| PES-01 | 73 | 56 | 15 648 | 9 695 |
| PES-02 | 72 | 46 | 14 812 | 11 092 |
| PES-03 | 97 | 44 | 12 514 | 11 367 |
| PES-04 | 93 | 32 | 12 958 | 11 951 |

Ein Vergleich des klassischen Ansatzes (Stand der Technik, Vergleichsbeispiel 2) mit dem in-situ Ansatz aus Ausführungsbeispiel 1 zeigt deutlich, dass der resultierende Wasserkontaktwinkel stark erniedrigt wurde. Folglich ist eine bessere und stabilere Performance dieser Membranen zu erwarten. Die in Folge der in-situ Modifizierung zu erkennende Reduktion der Permeabilität ist vermutlich auf eine Verengung der Porendurchmesser in Folge der Modifizierung zurück zu führen und kann durch eine Anpassung der Basis-Polymerlösung behoben werden. In den gezeigten Ausführungsbeispielen wurde jedoch Wert auf eine Vergleichbarkeit der Basismembran gelegt, um die Effekte der Modifizierung einzuordnen.

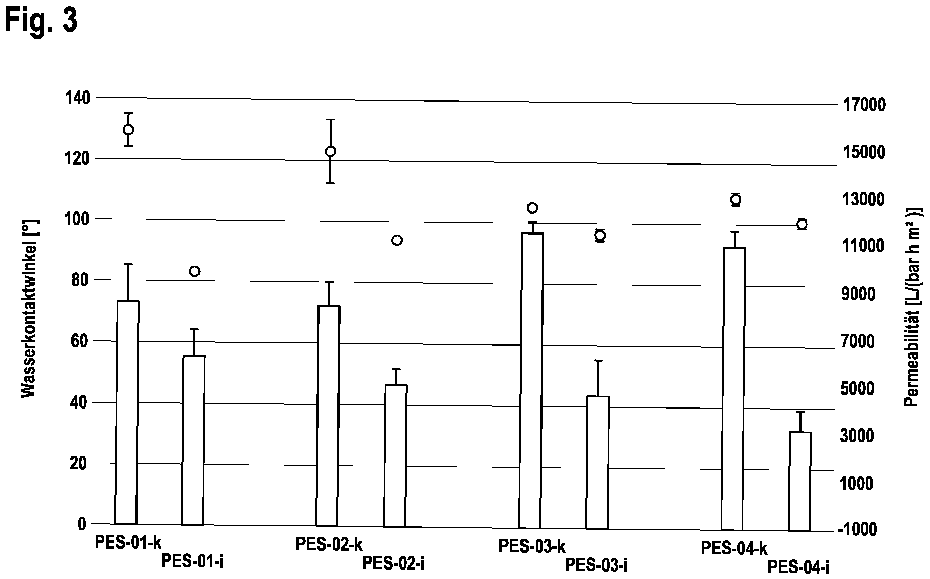

Die Ergebnisse aus Tabelle 3 sind auch als Fig. 3 graphisch dargestellt.

### Ausführungsbeispiel 3:

Das Beispiel wurde analog Ausführungsbeispiel 1 durchgeführt, betrifft allerdings eine Hohlfasermembran. Es ist schematisch in Fig. 2 gezeigt. Als Formgebungsvorrichtung wurde hierbei eine Hohlfaserspinndüse verwendet. In dieser Ausführung ist das Modifizierungsreagenz neben der Polymerlösung auch der Nicht-Lösungsmittel-basierten Kernlösung zugesetzt. Die Kernlösung ist eine notwendige Komponente bei der Hohlfaserherstellung und kann sich grundsätzlich vom eigentlichen Fällbad unterscheiden. Bei der Hohlfaserherstellung treten zwei parallele Fällungen auf: Von außen durch das Fällbad, sowie von innen durch die Kernlösung.

### Bezugszeichenliste

- 1: Polymerlösung, enthaltend das gelöste Polymer und das Modifizierungsreagenz
- 1a: Reservoir für Polymerlösung
- 1b: Formgebungsvorrichtung

- 2: Fällungsbad
- 2b: Kernlösung

- 3: Modifizierungsreagenz
- 4: Noch feuchtes Polymer-Filtermaterial

## Patentansprüche

1. Verfahren zur Herstellung und Veredelung von Polymer-Filtermaterialien mit den Schritten:
a) Fällung eines feuchten Polymer-Filtermaterials (4)
aus einer Polymerlösung (1), enthaltend das gelöste Polymer und ein Modifizierungsreagenz (3),
in einem Fällungsbad (2),
wobei das Modifizierungsreagenz (3) in der Polymerlösung (1) eine Konzentration von 0,05-1,1 Gew-% hat und auf eine Trocknung des erhaltenen feuchten Polymer-Filtermaterials verzichtet wird, und
b) Elektronenstrahl-Veredelung des noch feuchten Polymer-Filtermaterials (4) aus Schritt a), so dass das Modifizierungsreagenz (3) fixiert wird, wobei die Zeit ab Beginn der Fällung in dem Fällungsbad (2) in Schritt a) bis zum Beginn der Elektronenstrahl-Veredelung in Schritt b) bei max. 2 Minuten liegt.

2. Verfahren nach Anspruch 1, wobei das Modifizierungsreagenz (3) ausgewählt ist aus Glycerin, Benzoesäure, Malonsäure, Taurin, Toluolsulfonsäure, Ethylamin, Triethylamin, Phosphorylcholin, Glutamin, Glukose und Propionsäure.

3. Verfahren nach einem der vorhergehenden Ansprüche, wobei das Modifizierungsreagenz (3) Glycerin ist.

4. Verfahren nach einem der vorhergehenden Ansprüche, wobei es sich in Schritt a) um eine Nassfällung oder eine Nichtlösungsmittel-induzierte-Phasenseparation handelt.

5. Verfahren nach einem der vorhergehenden Ansprüche, wobei sich im Fällungsbad (2) mindestens 50 Gew-% Wasser befinden.

6. Verfahren nach einem der vorhergehenden Ansprüche, wobei das Lösungsmittel in der Polymerlösung (1) N-Methylpyrolidon (NMP), Dimethylformamid (DMF), Dimethylacetamid (DMAc), Dimethylsulfoxid (DMSO) oder Mischungen daraus ist.

7. Verfahren nach einem der vorhergehenden Ansprüche, wobei das Polymer ausgewählt ist aus PES, PET, PE und PP.

8. Verfahren nach einem der vorhergehenden Ansprüche, wobei das gefällte und veredelte Polymer-Filtermaterial eine Hohlfasermembran ist, und die Fällung im Innern der Hohlfasermembran mit einer Kernlösung (2b) durchgeführt wird, welche ebenfalls das Modifizierungsreagenz (3) enthält.

9. Verfahren nach einem der vorhergehenden Ansprüche, mit dem, dem Schritt a) vorgelagerten Schritt der Formgebung des zu fällenden Polymer-Filtermaterials mittels einer Formgebungsvorrichtung (1b).

10. Verfahren nach Anspruch 9, wobei die Formgebungsvorrichtung (1b) eine Abwicklung für ein Trägervlies oder eine Hohlfaserspinndüse ist.

11. Verfahren nach einem der vorhergehenden Ansprüche, wobei die Polymerlösung (1) in Schritt a) 14 Gew-% PES und 65 Gew-% PEG, jeweils ±5 Gew-%, sowie das Modifizierungsreagenz (3) enthält.

12. Verfahren nach einem der vorhergehenden Ansprüche, wobei auch das Fällungsbad (2) aus Schritt a) das Modifizierungsreagenz (3) enthält.

## Claims

1. A method for producing and refining polymer filter materials, comprising the following steps:
a) precipitating a moist polymer filter material (4)
from a polymer solution (1) containing a dissolved polymer and a modifying reagent (3),
in a precipitation bath (2),
wherein the modifying reagent (3) in the polymer solution (1) has a concentration of 0.05-1.1 wt% and drying of the resulting moist polymer filter material is omitted, and
b) electron beam refining of the still moist polymer filter material (4) from the step a) so that the modifying reagent (3) is fixed, wherein the time from starting the precipitation in the precipitation bath (2) in the step a) to starting the electron beam refining in the step b) is a maximum of 2 minutes.

2. The method according to claim 1, wherein the modifying reagent (3) is selected from glycerol, benzoic acid, malonic acid, taurine, toluenesulfonic acid, ethylamine, triethylamine, phosphorylcholine, glutamine, glucose, and propionic acid.

3. The method according to any one of the preceding claims, wherein the modifying reagent (3) is glycerol.

4. The method according to any one of the preceding claims, wherein the step a) is a wet precipitation or a non-solvent-induced phase separation.

5. The method according to any one of the preceding claims, wherein the precipitation bath (2) contains at least 50 wt% water.

6. The method according to any one of the preceding claims, wherein the solvent in the polymer solution (1) is N-methylpyrolidone (NMP), dimethylformamide (DMF), dimethylacetamide (DMAc), dimethyl sulfoxide (DMSO), or a mixture thereof.

7. The method according to any one of the preceding claims, wherein the polymer is selected from PES, PET, PE, and PP.

8. The method according to any one of the preceding claims, wherein the precipitated and refined polymer filter material is a hollow-fiber membrane, and the precipitation inside the hollow-fiber membrane is carried out with a core solution (2b) that also contains the modifying reagent (3).

9. The method according to any one of the preceding claims, comprising a step of shaping the to-be-precipitated polymer filter material using a shaping device (1b) prior to the step a).

10. The method according to claim 9, wherein the shaping device (1b) is a winder for a carrier fleece or a hollow-fiber spinneret.

11. The method according to any one of the preceding claims, wherein the polymer solution (1) in the step a) contains 14 wt% PES and 65 wt% PEG, each ±5 wt%, as well as the modifying reagent (3).

12. The method according to any one of the preceding claims, wherein the precipitation bath (2) from the step a) also contains the modifying reagent (3).

## Revendications

1. Procédé de fabrication et d'affinage de matériaux filtrants polymères comprenant les étapes suivantes :
a) précipitation d'un matériau filtrant polymère humide (4)
à partir d'une solution polymère (1) contenant le polymère dissous et un réactif de modification (3),
dans un bain de précipitation (2),
le réactif de modification (3) étant présent dans la solution polymère (1) à une concentration de 0,05 à 1,1 % en poids, sans séchage du matériau filtrant polymère humide obtenu, et
b) traitement par faisceau d'électrons du matériau filtrant polymère humide (4) issu de l'étape a), de façon à fixer le réactif de modification (3), le temps écoulé entre le début de la précipitation dans le bain de précipitation (2) à l'étape a) et le début du traitement par faisceau d'électrons à l'étape b) étant d'au maximum 2 minutes.

2. Procédé selon la revendication 1, dans lequel le réactif de modification (3) est choisi parmi le glycérol, l'acide benzoïque, l'acide malonique, la taurine, l'acide toluènésulfonique, l'éthylamine, la triéthylamine, le phosphorylcholine, la glutamine, le glucose et l'acide propionique.

3. Procédé selon l'une quelconque des revendications précédentes, dans lequel le réactif de modification (3) est le glycérol.

4. Procédé selon l'une quelconque des revendications précédentes, dans lequel l'étape a) consiste en une précipitation humide ou une séparation de phase induite par un non-solvant.

5. Procédé selon l'une quelconque des revendications précédentes, dans lequel le bain de précipitation (2) contient au moins 50 % en poids d'eau.

6. Procédé selon l'une quelconque des revendications précédentes, dans lequel le solvant de la solution polymère (1) est choisi parmi la N-méthylpyrrolidone (NMP), la diméthylformamide (DMF), la diméthylacétamide (DMAc), le diméthylsulfoxyde (DMSO) ou leurs mélanges.

7. Procédé selon l'une quelconque des revendications précédentes, dans lequel le polymère est choisi parmi le PES, le PET, le PE et le PP.

8. Procédé selon l'une quelconque des revendications précédentes, dans lequel le matériau filtrant polymère précipité et affiné est une membrane en fibres creuses, et la précipitation est réalisée à l'intérieur de la fibre creuse au moyen d'une solution de cœur (2b) contenant également le réactif de modification (3).

9. Procédé selon l'une quelconque des revendications précédentes, comprenant une étape préalable à l'étape a) de mise en forme du matériau filtrant polymère à précipiter, au moyen d'un dispositif de mise en forme (1b).

10. Procédé selon la revendication 9, dans lequel le dispositif de mise en forme (1b) est un dérouleur pour un non-tissé support ou une filière de filage de fibres creuses.

11. Procédé selon l'une quelconque des revendications précédentes, dans lequel la solution polymère (1) de l'étape a) contient 14 % en poids de PES et 65 % en poids de PEG, chacun ±5 %, ainsi que le réactif de modification (3).

12. Procédé selon l'une quelconque des revendications précédentes, dans lequel le bain de précipitation (2) de l'étape a) contient également le réactif de modification (3).
